# EUROPEAN PATENT APPLICATION

(11) **EP 2 322 838 A1**
(43) Date of publication of application: **18.05.2011**
(21) Application number: 09753490.3
(22) Date of filing: 27.05.2009
(51) Int. Cl.: F16M 11/00

(54) **A TV SET LIFTER**

(30) Priority: 27.05.2008 CN 200820037021 U
(71) Applicant: Changzhou New District Saien Electromechanical Equipment Co., Ltd., Zhonglou District Changzhou Jiangsu 213002 (CN)
(72) Inventor: Sun Zhimin, Jiangsu 213002 (CN)
(74) Representative: BRP Renaud & Partner
(86) International application number: PCT/CN2009/072010
(87) International publication number: WO 2009/143772

(57) **Abstract**

A TV set lifter comprises a guide rail (8), a guiding component (4), a TV set support (1) and a lifting mechanism (9). The guiding component is connected to the TV set support directly or indirectly and there is a rolling or sliding fit between the guiding component and the guide rail. There is a transmission connection between the lifting mechanism and the guiding component, the guide rail includes a face board (8-1) and two side boards (8-2), the lifting mechanism is positioned on the back of the face board, and the TV set support is positioned on the front of the face board. The device is decorative and can be produced easily.

## Description

### Field of the Invention

The present invention relates to a TV set support, particularly to a TV set lifter that may adjust the height and visual angle of the TV set.

### Background of the Invention

Watching TV is one of the major entertainment activities and information sources for people. With the popularization of LCD TV and plasma TV, the diversification of programs and the increase of channels, people spend more time on watching TV. Watching TV in a fixed position for a long time will make body become uncomfortable and may also lead to some diseases such as scapulohumeral periarthritis, lumbago, cervical spondylosis and sciatica. A TV set lifter can solve these troubles, and enable people to comfortably enjoy rich and colorful TV programs without causing harm on their health. With a TV set lifter, people can remotely or manually adjust the height and visual angle of the TV set according to their visual angle of lying or sitting position, in order to make the TV set be at the optimal visual angle, thereby meeting the requirements for comfortably watching TV. The existing TV set lifters occupy a large space and have poor decorative effect, thus resulting in limitation on their wide application.

### Summary of the Invention

The object of the present invention is to provide a TV set lifter which occupies a small space and has strong decorative effect.

In order to achieve the foregoing object, the present invention adopts the following technical scheme: a TV set lifter, comprising a guide rail, a guiding component, a TV set support and a lifting mechanism, wherein the guiding component is directly or indirectly connected to the TV set support and the guiding component is coordinated with the guide rail in a rolling or sliding manner. There is a transmission connection between the lifting mechanism and the guiding component and the guide rail includes a panel and two side plates, the lifting mechanism is located in the back of the panel of the guide rail, and the TV set support is located in the front of the panel.

After the foregoing structure is used, the guide rail has a panel and two side plates, the lifting mechanism is located in the back of the panel of the guide rail and the TV set support is located in the front of the panel, therefore the lifting mechanism is concealed behind the guide rail and achieves the object of occupying small space; further, not only the panel of the guide rail plays a role in covering the lifting mechanism but also its surface may be pasted with various wall paper, plastic paper board, grained board, metal composite paper, aluminum plastic composite panel, marble, decorative tiles, decorative glass, baking varnish or other materials and may also be inlaid with decorative light, clock, thermometer and hygrometer, so it has strong decorative effect and wide applicability and is particularly adapted to household and indoor decoration. Furthermore, the guide rail can be easily processed and shaped. For example, it may be made from a metal plate through folding or plastic through extrusion. It is characterized by low production cost and high carrying capacity , thus is suitable for batch production.

### Brief Description of the Drawings

The present invention will now be described in details by combining with the embodiments given in the accompanying drawings.
FIG. 1 is a structural schematic diagram of the first embodiment of a TV set lifter according to the present invention;
FIG. 2 is a left view of FIG. 1;
FIG. 3 is a back view of FIG. 1;
FIG. 4 is a cross-sectional view of FIG. 1 through view line A-A;
FIG. 5 is a cross-sectional view of FIG. 3 through view line B-B;
FIG. 6 is a structural schematic diagram of the second embodiment of a TV set lifter according to the present invention;
FIG. 7 is a left view of FIG. 6;
FIG. 8 is a back view of FIG. 6;
FIG. 9 is a cross-sectional view of FIG. 8 through view line C-C;
FIG. 10 is a structural schematic diagram of the third embodiment of a TV set lifter according to the present invention;
FIG. 11 is a left view of FIG. 10;
FIG. 12 is a cross-sectional view of FIG. 11 through view line D-D.

### Detailed Description of the Embodiments

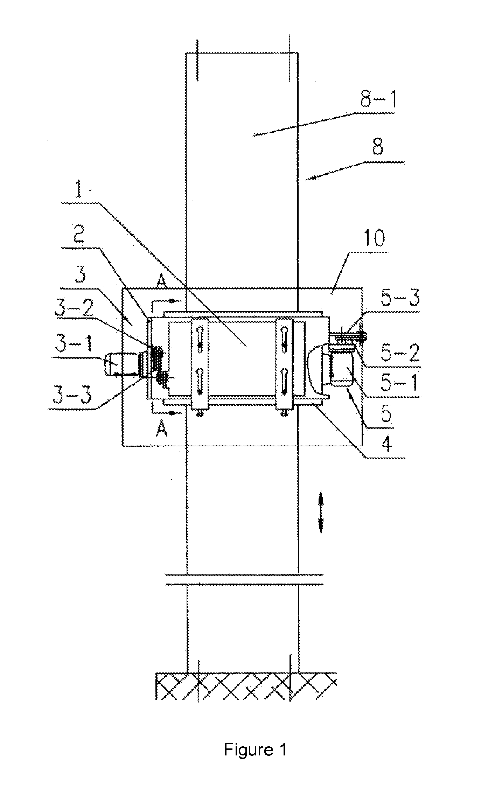

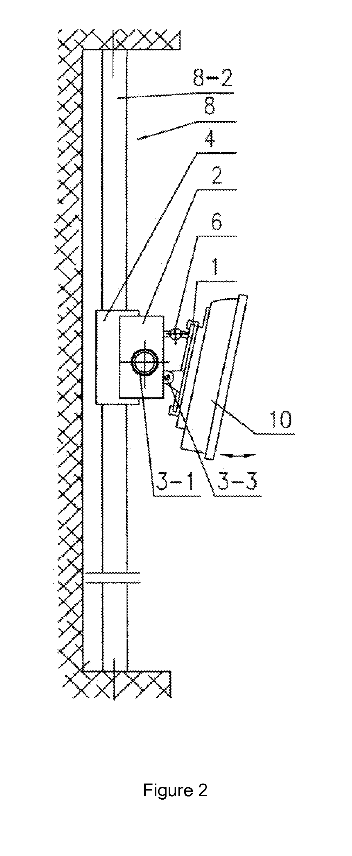

As shown in FIGs. 1, 2, 3, 4 and 5, it is the first embodiment of a TV set lifter according to the present invention, comprising a guide rail 8, a guiding component 4, a TV set support 1 and a lifting mechanism 9, wherein the guiding component 4 is directly or indirectly connected to the TV set support 1 and the guiding component 4 is coordinated with the guide rail 1 in a rolling or sliding manner. Lifting mechanism 9 is transmission connected to the guiding component 4 and the guide rail 8 includes a panel 8-1 and two side plates 8-2, the lifting mechanism 9 is located in the back of the panel 8-1 of the guide rail 8, and the TV set support 1 is located in the front of the panel 8.

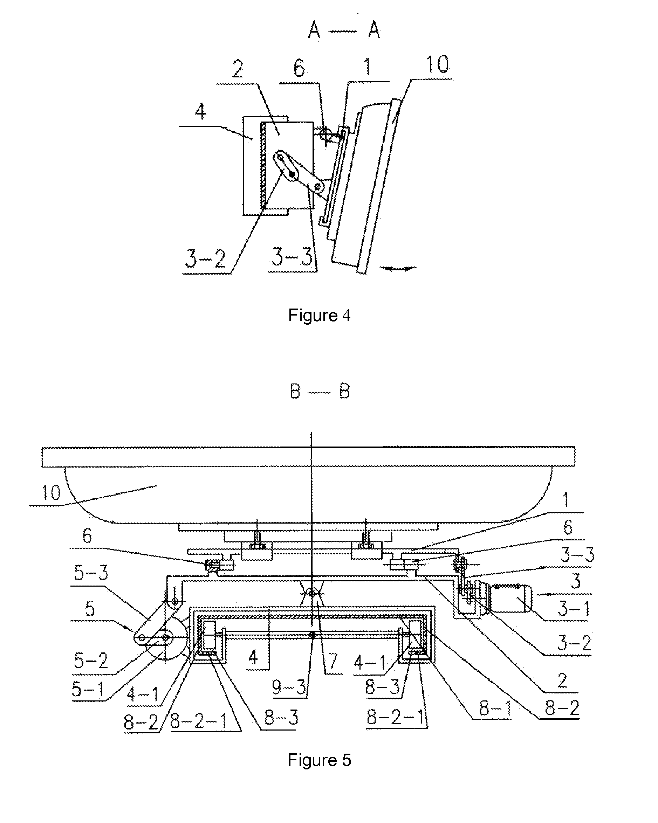

As shown in FIG. 5, each of the two side plates 8-2 has a guide wheel groove 8-3 on the inner side, the guiding component 4 has a roller wheel 4-1, and there is a rolling fit between the roller wheel 4-1 and the guide wheel groove 8-3.

As shown in FIG. 5, the guide wheel groove 8-3 is formed with the back of the panel 8-1, the side plates 8-2 and the hems 8-2-1 of the side plates 8-2.

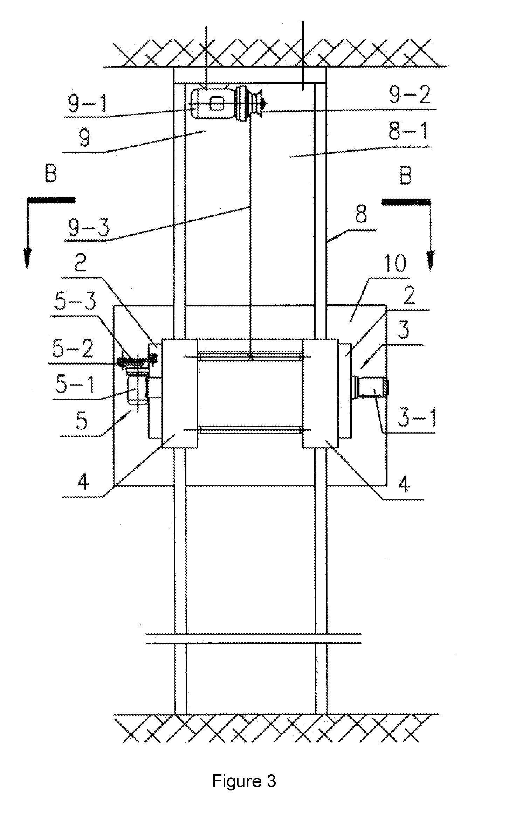

As shown in FIG. 3, the lifting mechanism 9 comprises a motor 9-1, a rolling-up wheel 9-2 and a rope 9-3, wherein the motor 9-1 is mounted on the upper portion of the back of the panel 8-1 of the guide rail 8, there is a fixed or transmission connection between the output shaft of the motor 9-1 and the rolling-up wheel 9-2, one end of the rope 9-3 is connected to the rolling-up wheel 9-2, and the other end of the rope 9-3 is connected to the guiding component 4. Alternatively, the lifting mechanism 9 may also adopt a structure of motor, chain wheel and chain.

As shown in FIGs. 1, 2, 3, 4 and 5, TV set support 1 is hinge connected to the support strut member 2, and support strut member 2 is hinge connected to the guiding component 4, a first angle adjuster 3 is disposed between the TV set support 1 and the support strut member 2, and a second angle adjuster 5 is disposed between the support strut member 2 and the guiding component 4.

As shown in FIGs. 1, 2, 3 and 5, the first angle adjuster 3 comprises a motor 3-1, a crank 3-2 and a connecting rod 3-3, wherein the crank 3-2 is mounted on the output shaft of the motor 3-1, and the crank 3-2 is connected to the connecting rod 3-3 in a movable manner; the second angle adjuster 5 comprises a motor 5-1, a crank 5-2 and a connecting rod 5-3, wherein the crank 5-2 is mounted on the output shaft of the motor 5-1, and the crank 5-2 is connected to the connecting rod 5-3 in a movable manner. Alternatively, the angle adjusters 3 and 5 may also be the angle adjusters having a meshing structure of screw and nut. The first angle adjuster 3 is a vertical angle adjuster; and the second angle adjuster 5 is a horizontal angle adjuster.

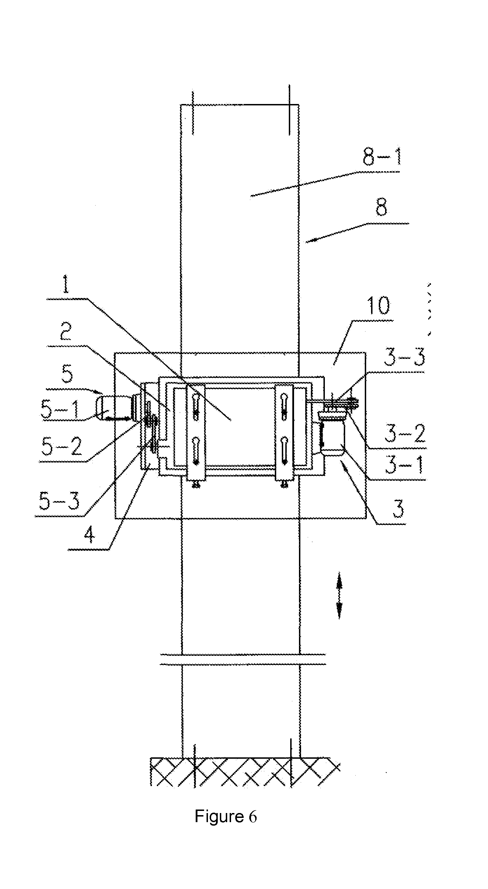

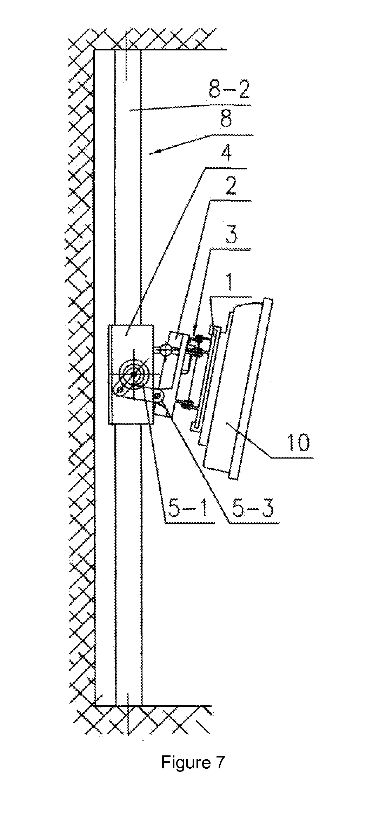

As shown in FIGs. 6, 7, 8 and 9, it is the second embodiment of a TV set lifter according to the present invention, comprising a guide rail 8, a guiding component 4, a TV set support 1 and a lifting mechanism 9, wherein the guiding component 4 is directly or indirectly connected to the TV set support 1 and the guiding component 4 is coordinated with the guide rail 1 in a rolling or sliding manner. Lifting mechanism 9 is transmission connected to the guiding component 4, the guide rail 8 includes a panel 8-1 and two side plates 8-2, the lifting mechanism 9 is located in the back of the panel 8-1 of the guide rail 8, and the TV set support 1 is located in the front of the panel 8.

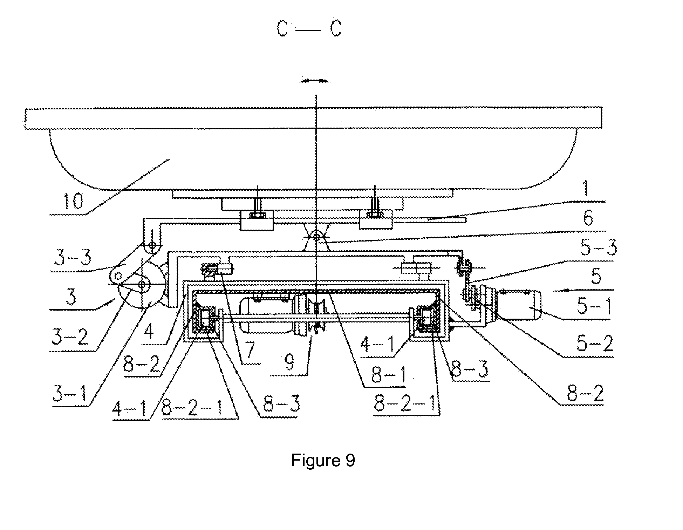

As shown in FIG. 9, each of the two side plates 8-2 has a guide wheel groove 8-3 on the inner side, the guiding component 4 has a roller wheel 4-1, and there is a rolling fit between the roller wheel 4-1 and the guide wheel groove 8-3.

As shown in FIG. 9, the guide wheel groove 8-3 is made up of the U-steel fixed on the side plates 8-2.

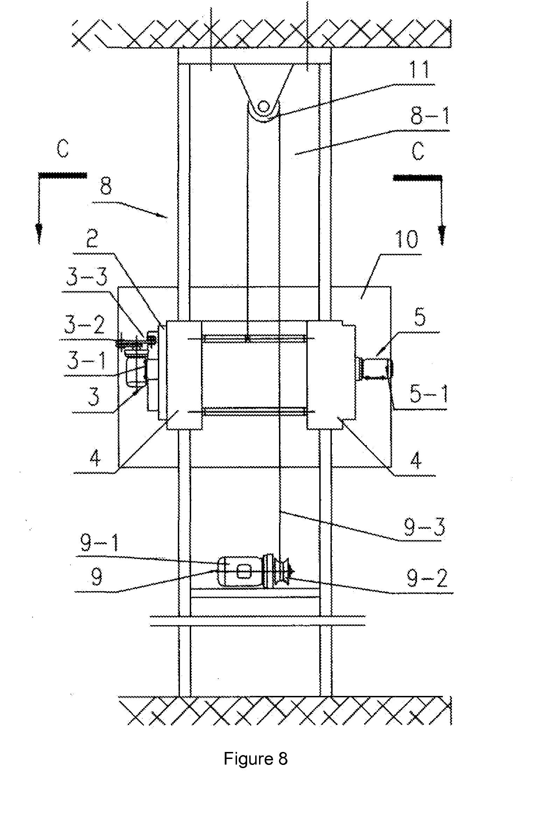

As shown in FIGs. 8 and 9, the lifting mechanism 9 comprises a motor 9-1, a rolling-up wheel 9-2 and a rope 9-3, wherein the motor 9-1 is mounted on the lower portion of the back of the panel 8-1 of the guide rail 8, there is a fixed or transmission connection between the output shaft of the motor 9-1 and the rolling-up wheel 9-2, one end of the rope 9-3 is connected to the rolling-up wheel 9-2, and the other end of the rope 9-3 bypasses the crown block 11 mounted on the upper part of the back of the panel 8-1 of the guide rail 8 and is connected to the guiding component 4. Alternatively, the lifting mechanism 9 may also adopt a structure of motor, chain wheel and chain.

As shown in FIGs. 6, 7, 8 and 9, TV set support 1 is hinge connected to the support strut member 2, and the support strut member 2 is hinge connected to the guiding component 4, a first angle adjuster 3 is disposed between the TV set support 1 and the support strut member 2, and a second angle adjuster 5 is disposed between the support strut member 2 and the guiding component 4.

As shown in FIGs. 6, 7, 8 and 9, the first angle adjuster 3 comprises a motor 3-1, a crank 3-2 and a connecting rod 3-3, wherein the crank 3-2 is mounted on the output shaft of the motor 3-1, and the crank 3-2 is connected to the connecting rod 3-3 in a movable manner; the second angle adjuster 5 comprises a motor 5-1, a crank 5-2 and a connecting rod 5-3, wherein the crank 5-2 is mounted on the output shaft of the motor 5-1, and the crank 5-2 is connected to the connecting rod 5-3 in a movable manner. Alternatively, the angle adjusters 3 and 5 may also be the angle adjusters having a meshing structure of screw and nut. The first angle adjuster 3 is a horizontal angle adjuster; and the second angle adjuster 5 is a vertical angle adjuster.

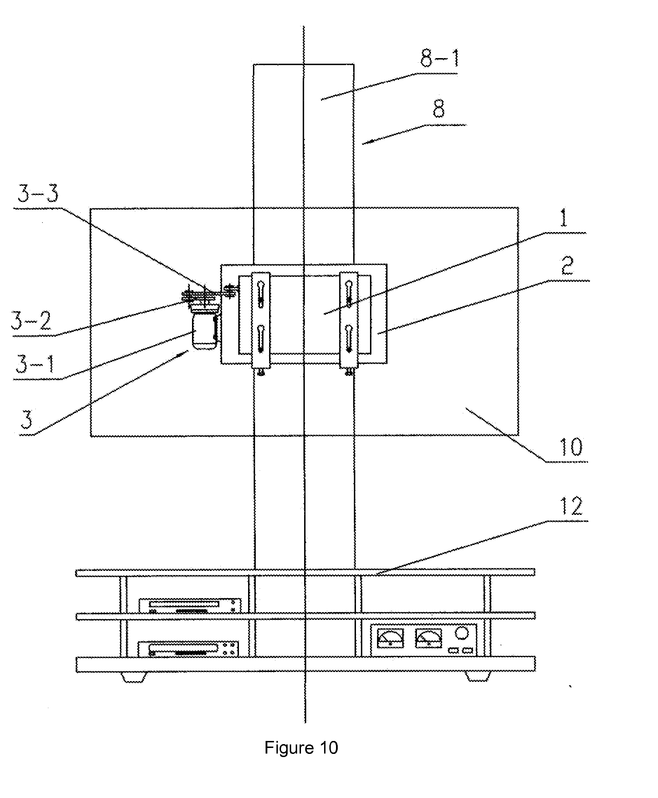

As shown in FIGs. 10, 11 and 12, it is the third embodiment of a TV set lifter according to the present invention, comprising a guide rail 8, a guiding component 4, a TV set support 1 and a lifting mechanism 9, wherein the guiding component 4 is hinge connected to the TV set support 1, there is a rolling fit between the guiding component 4 and the guide rail 1, the lifting mechanism 9 is transmission connected to the guiding component 4, the guide rail 8 includes a panel 8-1 and two side plates 8-2, the lifting mechanism 9 is located in the back of the panel 8-1 of the guide rail 8, and the TV set support 1 is located in the front of the panel 8.

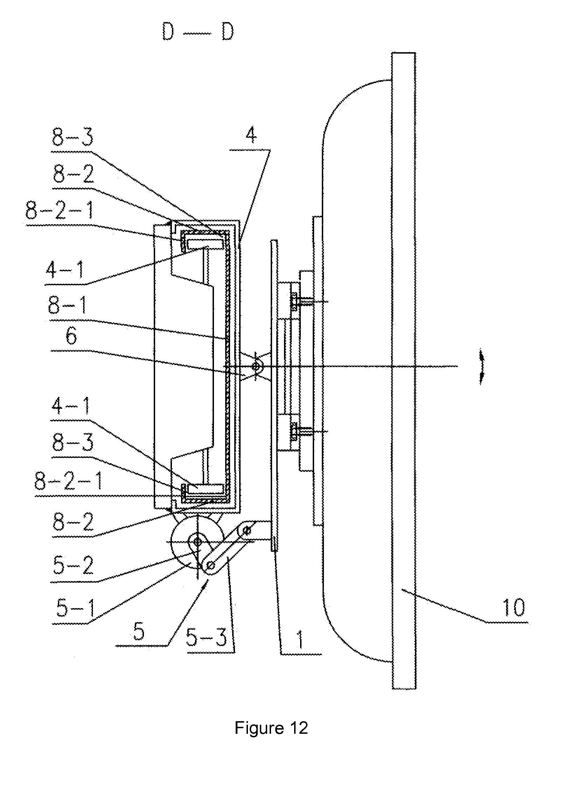

As shown in FIG. 12, each of the two side plates 8-2 has a guide wheel groove 8-3 on the inner side, the guiding component 4 has a roller wheel 4-1, and there is a rolling fit between the roller wheel 4-1 and the guide wheel groove 8-3.

As shown in FIG. 12, the guide wheel groove 8-3 is formed with the back of the panel 8-1, the side plates 8-2 and the hems 8-2-1 of the side plates 8-2.

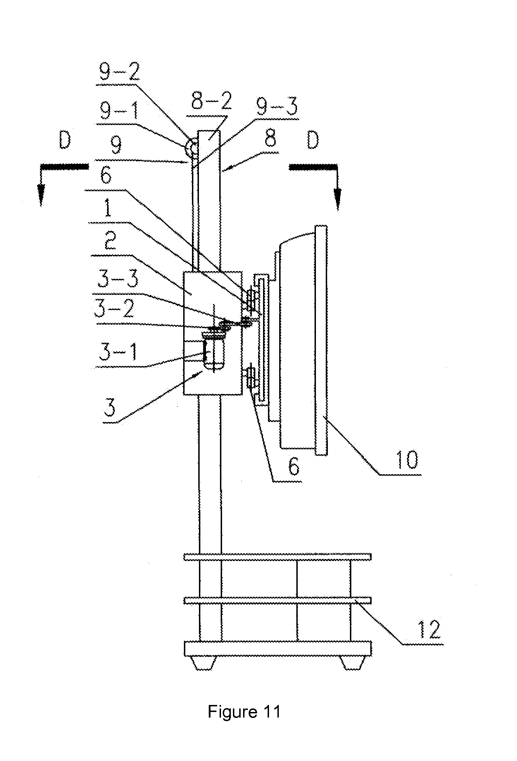

As shown in FIG. 11, the lifting mechanism 9 comprises a motor 9-1, a rolling-up wheel 9-2 and a rope 9-3, wherein the motor 9-1 is mounted on the upper part of the back of the panel 8-1 of the guide rail 8, the output shaft of the motor 9-1 is connected to the rolling-up wheel 9-2 in a fixed or transmission manner, one end of the rope 9-3 is connected to the rolling-up wheel 9-2, and the other end of the rope 9-3 is connected to the guiding component 4.

As shown in FIG. 10, 11 and 12, an angle adjuster 3 is disposed between the guiding component 4 and the TV set support 1.

As shown in FIG. 10, 11 and 12, the angle adjuster 3 comprises a motor 3-1, wherein, a crank 3-2 is mounted on the output shaft of the motor 3-1, and the crank 3-2 is connected to a connecting rod 3-3 in a movable manner. Alternatively, the angle adjusters 3 may also be an angle adjuster with a meshing structure of screw and nut. The angle adjuster 3 is a horizontal angle adjuster.

As shown in FIGs. 10 and 11, the guide rail 8 of this embodiment is mounted on a TV cabinet 12.

Preferably, the motors 3-1 and 5-1 of the angle adjusters and the motor 9-1 of the lifting mechanism 9 as described in the present invention are gear reduction permanent magnet synchronous motors.

When the present invention is in use, as shown in FIGs. 1, 2, 3, 4 and 5, taking the first embodiment for example, after using a switch or remote controller to give an order of moving up or moving down, the motor 9-1 of the lifting mechanism 9 drives the rolling-up wheel 9-2 to rotate and roll up the rope 9-3 and subsequently drives the guiding component 4 to move along the guide rail 8 so that the TV set 10 moves up or down to adjust the height and angle of the TV set 10.

During the use, after a switch or remote controller is used to give a up or down angle adjustment order, the motor 3-1 of the first angle adjuster 3 is powered on, the motor 3-1 rotates and drives the crank 3-2 to rotate at 360°, and the connecting rod 3-3 swings to and fro and pushes the TV set support 1 to vertically swing around the hinge 6; or a switch or remote controller may be used to issue a horizontal angle adjustment order, afterwards, the motor 5-1 of the second angle adjuster 5 is powered on, the motor 5-1 rotates and drives the crank 5-2 to rotate at 360°, and the connecting rod 5-3 reciprocally swings to and fro and pushes the support strut member 2 to horizontally swing around the hinge 7, and the support strut member 2 drives the TV set support 1 to swing together.

The present invention can be widely used in households, schools, meeting rooms, stations, hotels, bathrooms and other places.

## Claims

1. A TV set lifter, comprising a guide rail (8), a guiding component (4), a TV set support (1) and a lifting mechanism (9), **characterized in that** the guiding component (4) is directly or indirectly connected to the TV set support (1), the guiding component (4) is coordinated with the guide rail (1) in a rolling or sliding manner, and the lifting mechanism (9) is transmission connected to the guiding component (4), wherein:
a. The guide rail (8) has a plane (8-1) and two side plates (8-2),
b. The lifting mechanism (9) is located in the back of the plane (8-1) of the guide rail (8),
c. The TV set support (1) is located in the front of the plane (8).

2. The TV set lifter according to claim 1, **characterized in that** each of the two side plates (8-2) has a guide wheel groove (8-3) on the inner side, and the guiding component (4) has a roller wheel (4-1), which is coordinated with the guide wheel groove (8-3) in rolling manner.

3. The TV set lifter according to claim 2, **characterized in that** the guide wheel groove (8-3) is formed with the back of the plane (8-1), the side plates (8-2) and the hems (8-2-1) of the side plates (8-2).

4. The TV set lifter according to claim 2, **characterized in that** the guide wheel groove (8-3) is made up of the U-steel fixed on the side plates (8-2).

5. The TV set lifter according to claim 1, **characterized in that** the lifting mechanism (9) comprises a motor (9-1), a rolling-up wheel (9-2) and a rope (9-3), wherein the motor (9-1) is mounted on the upper portion of the back of the plane (8-1) of the guide rail (8), and the output shaft of the motor (9-1) is connected to the rolling-up wheel (9-2) in fixed or transmission manner, one end of the rope (9-3) is connected to the rolling-up wheel (9-2), and the other end of the rope (9-3) is connected to the guiding component (4).

6. The TV set lifter according to claim 1, **characterized in that** the lifting mechanism (9) comprises a motor (9-1), a rolling-up wheel (9-2) and a rope (9-3), wherein the motor (9-1) is mounted on the lower portion of the back of the plane (8-1) of the guide rail (8), and the output shaft of the motor (9-1) is transmission connected to the rolling-up wheel (9-2), one end of the rope (9-3) is connected to the rolling-up wheel (9-2), and the other end of the rope (9-3) bypasses the crown block (11) mounted on the upper portion of the back of the plane (8-1) of the guide rail (8) and is connected to the guiding component (4).

7. The TV set lifter according to claim 1 or 2 or 3 or 4, **characterized in that** the TV set support (1) is hinge connected to the support strut member (2), and the support strut member (2) is is hinge connected to the guiding component (4), a first angle adjuster (3) is disposed between the TV set support (1) and the support strut member (2), and a second angle adjuster (5) is disposed between the support strut member (2) and the guiding component (4).

8. The TV set lifter according to claim 7, **characterized in that** the first angle adjuster (3) comprises a motor (3-1), a crank (3-2) and a connecting rod (3-3), wherein the crank (3-2) is mounted on the output shaft of the motor (3-1), and the crank (3-2) is connected to the connecting rod (3-3) in a movable manner; the second angle adjuster (5) comprises a motor (5-1), a crank (5-2) and a connecting rod (5-3), wherein the crank (5-2) is mounted on the output shaft of the motor (5-1), and the crank (5-2) is connected to the connecting rod (5-3) in a movable manner.
